# EUROPEAN PATENT SPECIFICATION

(11) **EP 4 437 835 B1**
(45) Date of publication and mention of the grant of the patent: **24.06.2026**
(21) Application number: 23810913.6
(22) Date of filing: 17.05.2023
(51) Int. Cl.: A01G 3/033, A01G 3/08, B25F 5/02, A01G 3/037

(54) **HANDHELD ELECTRIC TOOL**
HANDHELD ELECTRIC TOOL
OUTIL ÉLECTRIQUE PORTATIF

(30) Priority: 23.05.2022 CN 202210565167; 16.09.2022 CN 202211130489
(43) Date of publication of application: 02.10.2024
(73) Proprietor: Nanjing Chervon Industry Co., Ltd., Nanjing, Jiangsu 211106 (CN)
(72) Inventor: XU, Zhongquan, Nanjing, Jiangsu 211106 (CN); ZHU, Huaguo, Nanjing, Jiangsu 211106 (CN); ZHONG, Keqiong, Nanjing, Jiangsu 211106 (CN); E, Mingshun, Nanjing, Jiangsu 211106 (CN)
(74) Representative: Sun, Yiming
(86) International application number: PCT/CN2023/094676
(87) International publication number: WO 2023/226840

(56) References cited:
- EP-B1- 2 853 148
- WO-A1-2020/094249
- CN-A- 103 181 262
- CN-A- 108 240 345
- CN-A- 111 436 292
- CN-A- 113 305 789
- CN-A- 113 305 789
- CN-U- 214 902 338
- TW-U- M 612 629
- US-A1- 2008 173 138
- US-A1- 2011 138 634
- US-A1- 2018 084 731

## Description

### TECHNICAL FIELD

The present invention relates to a power tool, for example, a handheld power tool and a one-handed saw.

### BACKGROUND

A chainsaw, also known as a hedge trimmer, is often used for pruning branches or forest trees. The chainsaw is generally a portable small or medium-sized chainsaw. Currently, the portable small or medium-sized chainsaw has a relatively low cutting height and cannot satisfy a working condition in which an object to be cut is slightly higher. A pole saw can satisfy high-position cutting, but cannot satisfy the convenience, lightweight, and flexibility of the portable small or medium-sized chainsaw. In addition to the chainsaw, other handheld power tools, such as electric scissors, a mower, and a handheld circular saw, also face the preceding situation. For portable handheld power tools, the user expects the tools to be compact and lightweight while satisfying the requirements of different pruning heights.

In addition, one-handed saws are common in the field of power tools. A one-handed saw is generally a sawing power tool that is operable by the user with just one hand. According to different purposes and working conditions, the one-handed saws may generally be divided into a one-handed chainsaw, a mini chainsaw, a one-handed reciprocating saw, a mini reciprocating saw, a one-handed electric circular saw, a mini electric circular saw, and the like.

EP2853148B1 discloses a tree cutting device comprising a cutting head with a movable cutting blade, a fixed cutting blade and a drive unit for the movable cutting blade, wherein the two cutting blades are connected to each other via a mounting part and wherein the opening angle of the fixed cutting blade can be locked via a toothed ring and a locking disc. The device further comprises a control unit with a handle and a push button for controlling the drive unit. The stationary cutting blade is adjustable by the drive unit to at least one working position in which the opening angle of the stationary cutting blade relative to the movable cutting blade is either increased or decreased, wherein the at least one working position is determined by a Hall plate for the detection of magnetic field components. A magnet arranged on a magnetic carrier and the Hall plate are displaceable relative to each other, wherein the magnetic field components of the at least one working position can be detected by a Hall sensor and transmitted to a control unit for controlling the drive unit of the stationary cutting blade.

CN113305789A provides a long rod type electric tool, which comprises a working assembly, a holding part, a power supply, a long rod assembly and an adjusting assembly. The working assembly comprises a working element for outputting work and a motor for driving the working element; the working element at least partially extends along a first plane; the holding part is used for being held by a user; the long rod assembly is connected with the holding part and the working assembly; the adjusting assembly comprises an adaptive rod, a first adjusting part and a first locking mechanism; the adaptive rod at least comprises a first adaptive rod; the first adjusting part is arranged on the first adaptive rod and can slide relative to the first adaptive rod; the first locking mechanism is connected to the first adjusting part, and at least can be switched to a locking state and an unlocking state by the first adjusting part; in the locking state, the adjusting assembly is connected with the first adaptive rod and the working assembly in a rotation stopping mode through the first locking mechanism; and in the unlocking state, the working assembly can rotate relative to the first adaptive rod, so that the first plane can rotate around a first straight line. According to the long rod type electric tool, the side cutting angle of the long rod type electric tool can be freely adjusted, so that the operation requirements of different angles are met.

US2011138634A1 provides a pruning machine with an extendible rod. The pruning machine also includes a main body and a battery pack. The main body has a housing, a blade group, a motor, a transmission device and a switch on the outside of the housing. The battery pack has a plug to connect with a socket on the main body. One end of the extendible rod has the same plug as the battery pack to connect with the socket of the main body plug and the other end has the same socket of the main body to receive the plug of the battery pack.

US2008173138A1 discloses a method and system of a reciprocating tree saw power tool. This invention may comprise a power base for powering a reciprocating tree saw attachment, the power base configured to power various other functional modules; a mounting plate of the power base for associating the reciprocating tree saw attachment with the power base; and a control module disposed in the power base for controlling the reciprocating tree saw attachment. Other functional modules may include a clamping nailer/stapler attachment, a bulb planting auger attachment, a sickle bar hedge trimmer attachment, an inspection camera attachment, and a vacuum cup bulb changer attachment.

CN214902338U discloses a telescopic rod comprising an outer sleeve, an inner sleeve, a guide piece and a buckle assembly, the guide piece is fixedly installed at one end of the inner sleeve, the shape of the guide piece is matched with the shape of the pipe wall of the outer sleeve, the guide piece is movably installed in the outer sleeve, and the buckle assembly is connected with the guide piece. A first fixing hole is formed in the outer sleeve, a plurality of second fixing holes are formed in the inner sleeve, the buckle assembly comprises a fixing ring and a buckle, the fixing ring is fixedly installed at one end of the outer sleeve, one end of the buckle is movably installed on the fixing ring, and the other end of the buckle is movably installed on the inner sleeve. The other end of the connecting rod penetrates through the first fixing hole and the second fixing hole in sequence and fixes the outer sleeve and the inner sleeve; the sugarcane trimmer comprises the telescopic rod, a handle mechanism and a trimming mechanism, wherein the handle mechanism and the trimming mechanism are fixedly installed at the two ends of the telescopic rod respectively, and the handle mechanism is electrically connected with the trimming mechanism.

WO2020094249A1 discloses a lopping shear or lopper of the scissor type provided with a pruning head comprising a blade and a counter-blade supported by a blade-support placed on a support of the pruning head.

### SUMMARY

An object of the present invention is to provide a chainsaw and a handheld power tool that are convenient, lightweight, flexible, and operable with one hand to satisfy the requirements of the user for the length of the handheld power tool in different working conditions.

To achieve the preceding object, the present invention is defined in the appended claims.

### BRIEF DESCRIPTION OF DRAWINGS

FIG. 1 is a schematic view of a chainsaw and a handheld power tool as a first example of the present invention.
FIG. 2 is an exploded view of the chainsaw and the handheld power tool shown in FIG. 1.
FIG. 3 is a schematic view of the chainsaw and the handheld power tool shown in FIG. 1 from another perspective.
FIG. 4 is a partial schematic view of the chainsaw and the handheld power tool with an adjustment device in a second state.
FIG. 5 is a schematic view of an adjustment device in a first state.
FIG. 6 is a partial exploded view of an adjustment device in a second state.
FIG. 7A is a schematic view of an adjustment device with a first length.
FIG. 7B is a schematic view of an adjustment device with a second length.
FIG. 8 is a schematic view of an adjustment switch and an adjustment device.
FIG. 9A is a schematic view of electric scissors as a second example of the present invention.
FIG. 9B is a schematic view of the electric scissors in FIG. 9A in another state.
FIG. 10 is a schematic view of a chainsaw in a retracted state as a third example of the present invention.
FIG. 11 is a schematic view of the chainsaw shown in FIG. 10 with a first connecting rod retracted and a second connecting rod extended.
FIG. 12 is a schematic view of the chainsaw in FIG. 11 from another perspective.
FIG. 13 is a schematic view of the chainsaw shown in FIG. 10 with both a first connecting rod and a second connecting rod extended.
FIG. 14 is schematic view one of the chainsaw shown in FIG. 10 with part of a handle omitted.
FIG. 15 is an enlarged view of part A in FIG. 14.
FIG. 16 is a sectional view of part of the structure of the chainsaw shown in FIG. 10.
FIG. 17 is schematic view two of the chainsaw shown in FIG. 10 with part of a handle omitted.
FIG. 18 is an enlarged view of part B in FIG. 17.
FIG. 19 is a schematic view of a locking assembly of the chainsaw shown in FIG. 17.
FIG. 20 is a schematic view of part of a handle of the chainsaw shown in FIG. 17.
FIG. 21 is a schematic view of the chainsaw shown in FIG. 13 from another perspective.
FIG. 22 is an enlarged view of part C in FIG. 21.
FIG. 23 is a schematic view of a nail gun as a fourth example of the present invention.
FIG. 24 is a schematic view of a nail gun as a fourth example of the present invention.
FIG. 25 is a schematic view of a chainsaw in an extended state as a fifth example of the present invention.
FIG. 26 is a schematic view of the chainsaw shown in FIG. 25 in a retracted state.
FIG. 27 is a side view of the chainsaw and a handheld power tool in FIG. 10 placed on a horizontal plane.
FIG. 28 is a side view of the chainsaw and the handheld power tool in FIG. 27 in another working state placed on a horizontal plane.
FIG. 29 is a schematic view of an example of a chainsaw and a handheld power tool in a first working state.
FIG. 30 is a schematic view of the chainsaw and the handheld power tool in FIG. 29 in a second working state.

### DETAILED DESCRIPTION

In the description of the present invention, it is to be noted that orientations or position relations indicated by terms such as "center", "upper", "lower", "left", "right", "front", and "rear" are based on the drawings. These orientations or position relations are intended only to facilitate and simplify the description of the present invention and not to indicate or imply that a device or element referred to must have such particular orientations or must be configured or operated in such particular orientations. Thus, these orientations or position relations are not to be construed as limiting the present invention. In addition, terms such as "first" and "second" are used merely for the purpose of description or are used for distinguishing between different structures or components, and are not to be construed as indicating or implying relative importance.

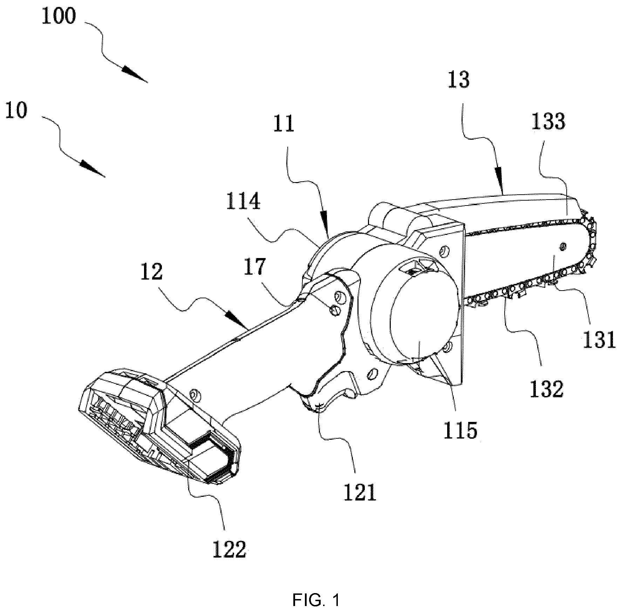

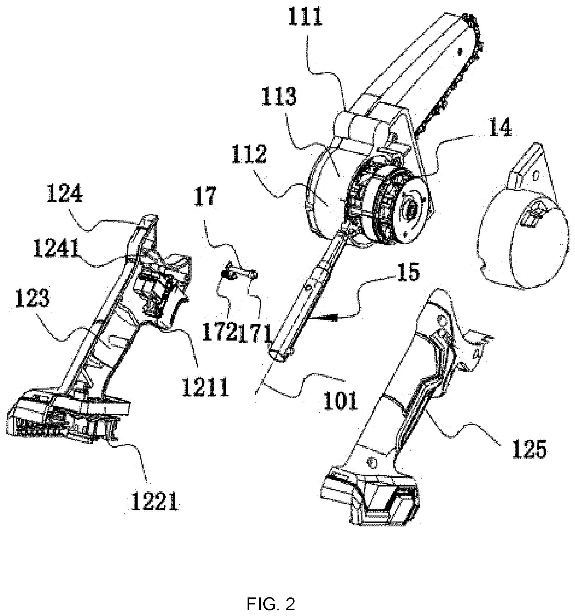

FIG. 1 shows a handheld power tool 10 as a first example. The handheld power tool 10 is, for example, a chainsaw 100 generally configured to prune branches or forest trees. As shown in FIGS. 1 and 2, the chainsaw 100 generally includes a body housing 11, an output assembly 13, a motor 14, a power supply device, and the like. The body housing 11 has a front part 111, a rear part 112, and an intermediate part 113 between the front part 111 and the rear part 112. For the chainsaw 100, the output assembly 13 is a cutting assembly and includes a chain 132, a guide plate 131 that supports the movement of the chain 132, and a protective cover 133 that protects the chain. The motor 14 is disposed in the intermediate part 113 of the body housing 11 and configured to drive the chain 1132 to move around the guide plate 131 to implement the cutting operation. For example, the body housing 11 is formed by a left housing 114 and a right housing 115. In this example, the right housing 115 is configured to accommodate the motor 14, and the axial direction of the motor 14 is basically perpendicular to the plane where the guide plate 131 is located. The output assemblies 13 of other forms of handheld power tools 10 than the chainsaw 100 may be different from the output assembly 13 of the chainsaw 100.

The body housing 11 is further formed with a handle 12 for the user to hold. The handle 12 is disposed on the rear side of the body housing 11. For example, a first switch 121 is disposed at one end of the handle 12 facing the rear part 112 of the body housing 11, and a coupling portion 122 for connecting a power supply device 17 is formed at one end of the handle 12 facing away from the rear part 112 of the body housing 11. The first switch 121 is operable by the user and is configured to control the starting and stopping of the motor 14. In an example, the first switch 121 may be configured to adjust the rotational speed of the motor 14. In this example, the first motor 121 is a trigger. In other examples, the first switch 121 may be a switch that is pushable forward and backward or a switch that is togglable left and right. The power supply device 17 is connected to the coupling portion 122 and configured to supply electrical energy to the chainsaw 100. In this example, the power supply device is configured to be a battery pack. It is to be understood that the power supply device is not limited to the scenario of using the battery pack, and the power may be supplied to the circuit elements through mains power or an alternating current (AC) power supply in conjunction with the corresponding rectifier circuit, filter circuit, and voltage regulator circuit.

The handle 12 includes a left handle housing 124 and a right handle housing 125. The left handle housing 124 and the right handle housing 125 form an accommodation space 123. In this example, the first switch 121 is connected to an integrated switch 1211 and configured to control the rotational speed of the motor 14 to control the cutting speed of the chainsaw 100. For example, the integrated switch 1211 is disposed in the accommodation space 123 and corresponds to the first switch 121. The accommodation space 123 further accommodates a circuit board assembly 1221 that corresponds to the coupling portion 122 and is configured to control the power supply state of the power supply device 17 or communicate with the power supply device 17.

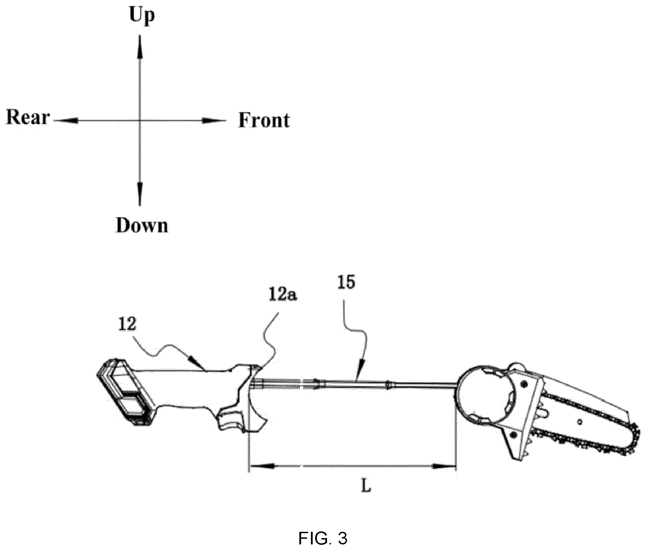

In this example, the handle 12 is formed with or connected to an adjustment device 15. The adjustment device 15 extends along the direction of a first straight line 101 and is connected to the rear part 112 of the body housing 11. The adjustment device 15 has a first state and a second state in the direction of the first straight line 101. FIG. 1 shows a schematic view of the adjustment device 15 in the chainsaw 100 in the first state, and FIG. 3 shows a schematic view of the adjustment device 15 in the chainsaw 100 in the second state. For example, when the adjustment device 15 is in the first state, at least part of a front end surface 12a of the handle 12 abuts against the rear part 112. It is to be understood that when the adjustment device 15 is in the first state, the front end surface 12a of the handle 12 does not abut against the rear part 112, but is separated by a relatively short distance. When the adjustment device 15 is in the second state, at least part of the adjustment device 15 is located between the rear part 112 of the body housing 11 and the front end surface 12a of the handle 12. It is to be understood that when the adjustment device 15 is in the first state, the adjustment device 15 can be completely disposed in the accommodation space 123 formed by the handle 12. When the adjustment device 15 is in the second state, at least part of the adjustment device 15 is located outside the accommodation space 123 formed by the handle 12.

For example, as shown in FIG. 3, the adjustment device 15 is disposed between the body housing 11 and the handle 12. The handle 12 is movable relative to the rear part 112 along the extension direction of the adjustment device 15. During the movement of the handle 12, the first distance L between the front end surface 12a of the handle 12 and the rear part 112 in the front and rear direction is greater than or equal to 0 and less than 1 meter. For example, the first distance L between the front end surface 12a of the handle 12 and the rear part 112 in the front and rear direction is greater than or equal to 0 and less than 0.8 meters. For example, the first distance L between the front end surface 12a of the handle 12 and the rear part 112 in the front and rear direction is greater than or equal to 0 and less than 0.6 meters. The first distance L may be understood as the maximum length of the part of the adjustment device 15 located between the handle 12 and the body housing 11. That is to say, during the movement of the handle 12, the maximum distance between the front end surface 12a of the handle 12 and the rear part 112 of the body housing 11 in the front and rear direction is greater than or equal to 0 and less than 1 meter.

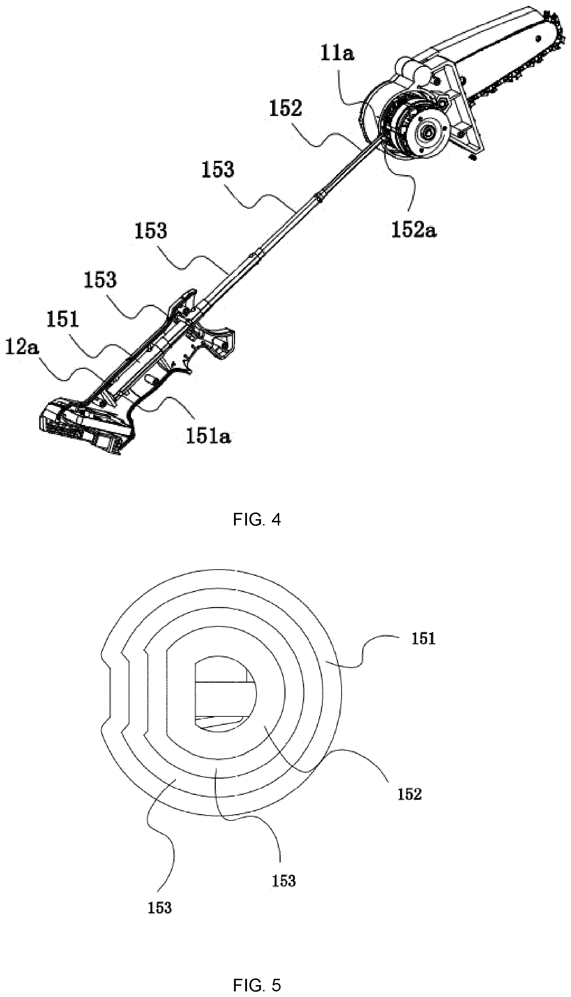

For example, as shown in FIG. 4, the adjustment device 15 includes at least a first connecting rod 151, a second connecting rod 152, and at least one intermediate connecting rod 153. The first connecting rod 151 is fixedly connected to the handle 12, the second connecting rod 152 is fixedly connected to the rear part 121 of the body housing 11, and the intermediate connecting rod 153 is disposed between the first connecting rod 151 and the second connecting rod 152. In this example, first fixing pins 151a are formed on or connected to the first connecting rod 151, multiple first through holes 12a are formed inside the handle 12, and two ends of the first fixing pin 151a are disposed in the first through hole 12a separately, thereby ensuring that the first connecting rod 151 is fixedly connected to the handle 12. Similarly, second fixing pins 152a are formed on or connected to the second connecting rod 152, multiple second through holes 11a are formed on the rear part 112 of the body housing 11, and two ends of the second fixing pin 152a are disposed in the second through hole 11a separately, thereby ensuring that the second connecting rod 152 can be fixedly connected to the body housing 11. It is to be understood that many methods in which the first connecting rod 151 is fixed to the handle 12 and the second connecting rod 152 is fixed to the rear part 121 of the body housing 11 exist, which are not limited here. Of course, those skilled in the art may provide a non-fixed connection method, for example, the first connecting rod can be slidably connected to the handle, or other examples, which are not limited here.

As shown in FIGS. 2 and 5, when the adjustment device 15 is in the first state, the adjustment device 15 can be completely disposed in the accommodation space 123 formed by the handle 12. For example, the intermediate connecting rod 153 is sleeved on the second connecting rod 152, and the first connecting rod 151 is sleeved on the intermediate connecting rod 153. It is to be understood that one intermediate connecting rod 153 may be provided. Of course, multiple intermediate connecting rods 153 may be provided. When multiple intermediate connecting rods are provided, the multiple intermediate connecting rods are sleeved together.

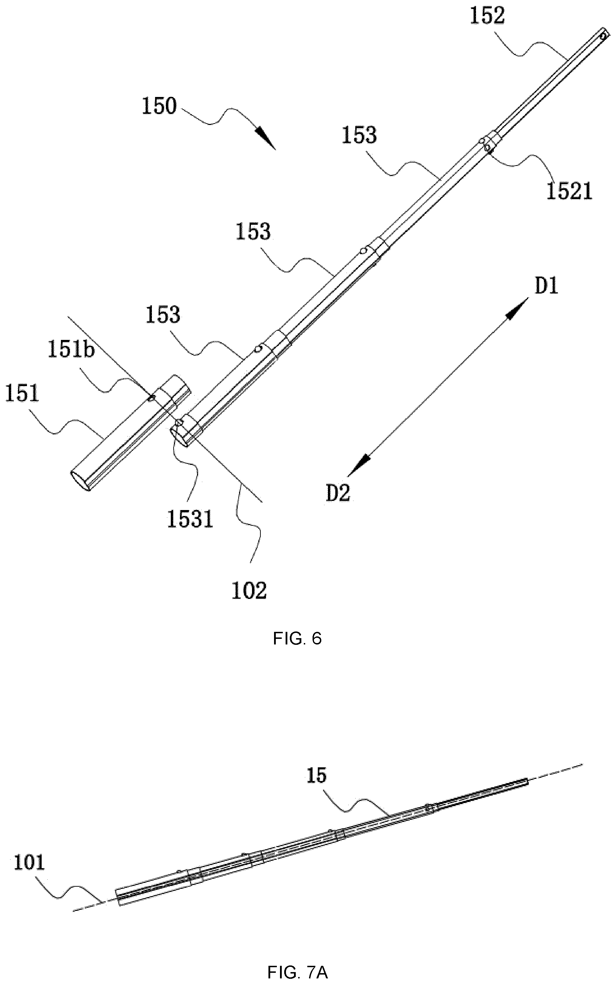

Referring to FIGS. 4 and 6, the adjustment device 15 further includes multiple locking members. The second connecting rod 152 and each intermediate connecting rod 153 are provided with the locking members. For example, the intermediate connecting rod 153 close to the first connecting rod 151 is used as an example for the detailed description of the working principle and function of the locking member.

As shown in FIG. 6, a first limiting member 1531 is formed on or connected to the intermediate connecting rod 152. The first limiting member 1531 has a first state and a second state in the direction of a second straight line 102. A first limiting portion is formed on the first connecting rod 151. For example, the first limiting portion is optionally configured to be a first limiting hole 151b. When the adjustment device 15 is in the first state, the first limiting member 1531 on the intermediate connecting rod 153 is in the first state. At this time, the first limiting member 1531 is located outside the first limiting hole 151b, and the first connecting rod 151 and the intermediate connecting rod 153 are movable relatively along the first direction D1 or the second direction D2. When the adjustment device 15 is in the second state, the first limiting member 1531 on the intermediate connecting rod 154 is in the second state. At this time, the first limiting member 1531 is disposed in the first limiting hole 151b, and the first connecting rod 151 and the intermediate connecting rod are relatively fixed.

In some examples, when the adjustment device 15 is in the second state, the adjustment device 15 has at least a first length and a second length in the direction of the first straight line 101. The first length is less than the second length. For example, when the adjustment device 15 has the first length, a second locking member 1521 is disposed at a limiting portion of the intermediate connecting rod 153, and the intermediate connecting rod 153 and the second connecting rod 152 are fixedly connected through the second locking member 1521. When the adjustment device 15 has the second length, a first locking member 1531 is disposed at a limiting portion of the first connecting rod 151, and the first connecting rod 151 and the intermediate connecting rod 153 are fixedly connected through the first locking member 1521.

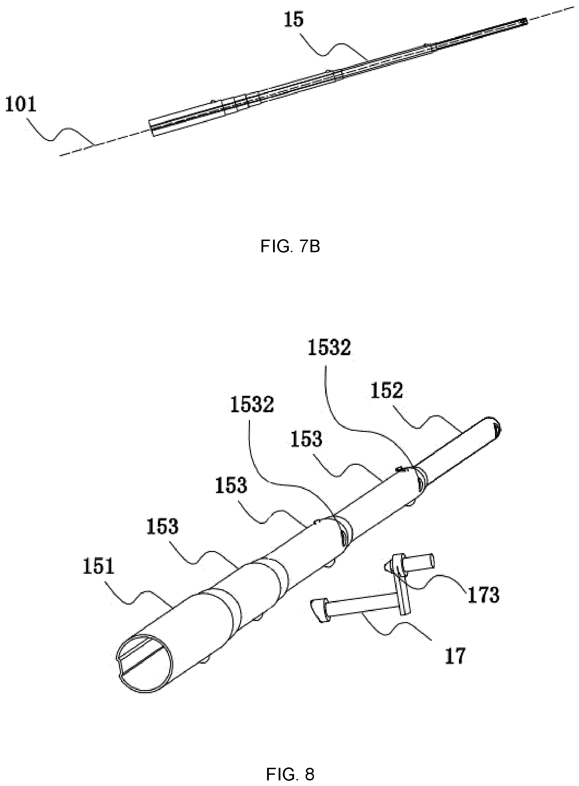

For example, as shown in FIG. 7A, when the adjustment device 15 has the first length in the direction of the first straight line 101, the second connecting rod 152 and the intermediate connecting rod 153 close to the second connecting rod 152 are relatively fixed under the action of the locking member. Referring to FIG. 7B, when the adjustment device 15 has the second length in the direction of the first straight line 101, all the locking members in the adjustment device 15 are located in the corresponding limiting holes. In this example, as shown in FIG. 3, when the adjustment device 15 has the second length in the direction of the first straight line 101, the first distance L between the grip center A of the handle 12 and the center B of the guide plate 131 is configured to be less than or equal to 1 meter.

Referring to FIGS. 1, 2, and 8, the chainsaw 100 further includes an adjustment switch 17 partially disposed in a groove 1241 formed by the left handle housing 124. The adjustment switch 17 is disposed on the handle 12. The adjustment switch 17 has a locking state and an unlocking state. For example, when the adjustment switch 17 is in the unlocking state, the handle 12 is movable relative to the rear part 112 of the body housing 11 along the direction of the first straight line 101. For example, the adjustment switch 17 includes a push rod 171 for the user to operate. When the user presses the push rod 171, the adjustment switch 17 is in the unlocking state; and when the user releases the push rod 171, the adjustment switch 17 is in the locking state. For example, the adjustment switch 17 further includes a return spring 172. When the user releases the push rod 171, the adjustment switch 171 returns to the locking state from the unlocking state under the action of the return spring 172.

For example, as shown in FIG. 8, the adjustment device 15 is provided with multiple locking holes 1532. When the adjustment switch 17 is in the locking state, a locking post 173 of the adjustment switch 17 is located in one of the multiple locking holes 1532 so that the handle 12 and the body housing 11 cannot move relative to each other. When the adjustment switch 17 is in the unlocking state, the locking post 173 of the adjustment switch 17 is disengaged from the locking hole 1532 so that the handle 12 and the body housing 11 are movable relatively in the direction of the first straight line 101. It is to be understood that many methods for implementing the adjustment switch exist.

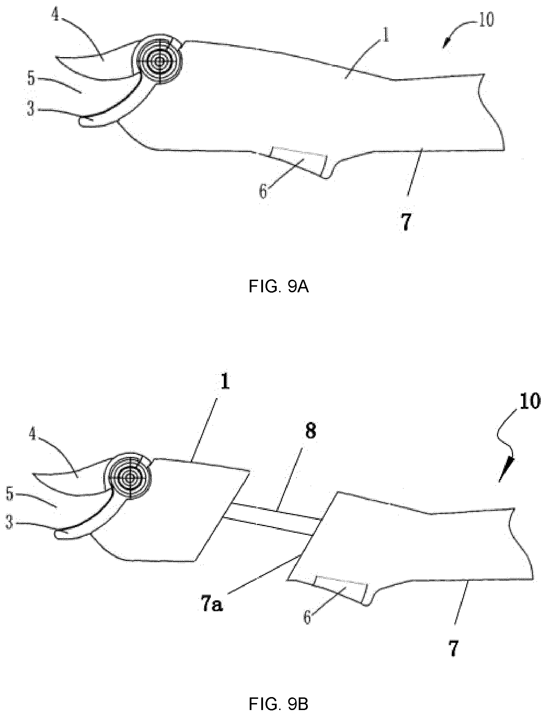

As a second example of the handheld power tool 10, as shown in FIGS. 9A and 9B, the handheld power tool 10 is, for example, electric scissors 10 generally configured to prune branches or forest trees. The electric scissors come in many shapes and types. The electric scissors 10 in this example include a body housing 1 and a motor (not shown in the figure) mounted in the body housing 1. The cutter part of a pruner 10 is formed by a fixed blade 3 and a movable blade 4. The fixed blade 3 is fixedly mounted relative to the housing 1, and the movable blade 4 is connected to the motor through a power transmission device. A knife edge 5 is formed between the fixed blade 3 and the movable blade 4. A switch 6 is mounted on the body housing 1. To be suitable for different working places, the pruner 10 is powered by the battery pack mounted at the end of the handle 12. The pruner 10 further includes a handle 7 for the user to hold and an adjustment device 8.

For example, the adjustment device is disposed between the body housing 1 and the handle 7. The handle 7 is movable relative to the body housing 1 along the extension direction of the adjustment device 8. The adjustment device 8 is telescopic to a first state and a second state along the extension direction of the adjustment device 8. FIG. 9A shows a schematic view of the electric scissors 10 when the adjustment device 8 is in the first state. FIG. 9B shows a schematic view of the electric scissors 10 when the adjustment device 8 is in the second state. When the adjustment device 8 is in the first state, the distance between a front end surface 7a of the handle 7 and the rear part of the body housing 1 is the shortest. When the adjustment device is in the second state, the part of the adjustment device located between the front end surface of the handle and the rear part of the body housing has at least a first length and a second length, and the second length is greater than the first length. During the movement of the handle 7, the shortest distance between the front end surface 7a of the handle 7 and the rear end surface of the body housing 1 in the front and rear direction is greater than or equal to 0 and less than or equal to 0.03 meters. For example, the shortest distance between the front end surface 7a of the handle 7 and the rear end surface of the body housing 1 in the front and rear direction is greater than or equal to 0 and less than or equal to 0.02 meters. The shortest distance between the front end surface 7a of the handle 7 and the rear end surface of the body housing 1 in the front and rear direction is greater than or equal to 0 and less than or equal to 0.01 meters. In some examples, the handle 7 is formed with an accommodation space, and when the adjustment device 8 is in the first state, the adjustment device 8 can be completely disposed in the preceding accommodation space.

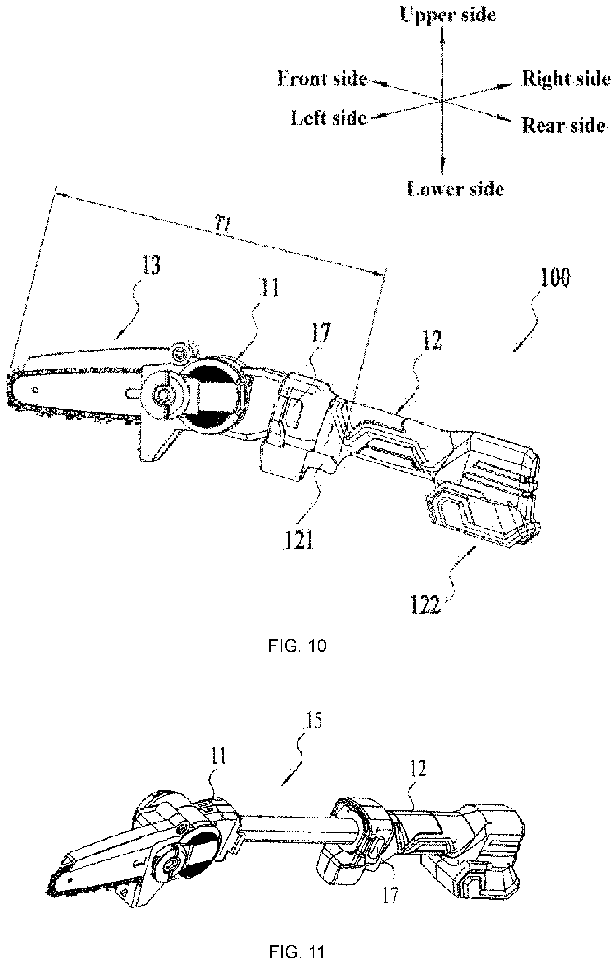

As a third example of the handheld power tool 10, referring to FIGS. 10 to 13, the handheld power tool 10 is, for example, a chainsaw 100. The chainsaw 100 includes a first connecting rod 151 and a second connecting rod 152. The first connecting rod 151 is connected to a handle 12, and the second connecting rod 152 is connected to the rear part of a body housing 11. In an example, both the first connecting rod 151 and the second connecting rod 152 are aluminum tubes.

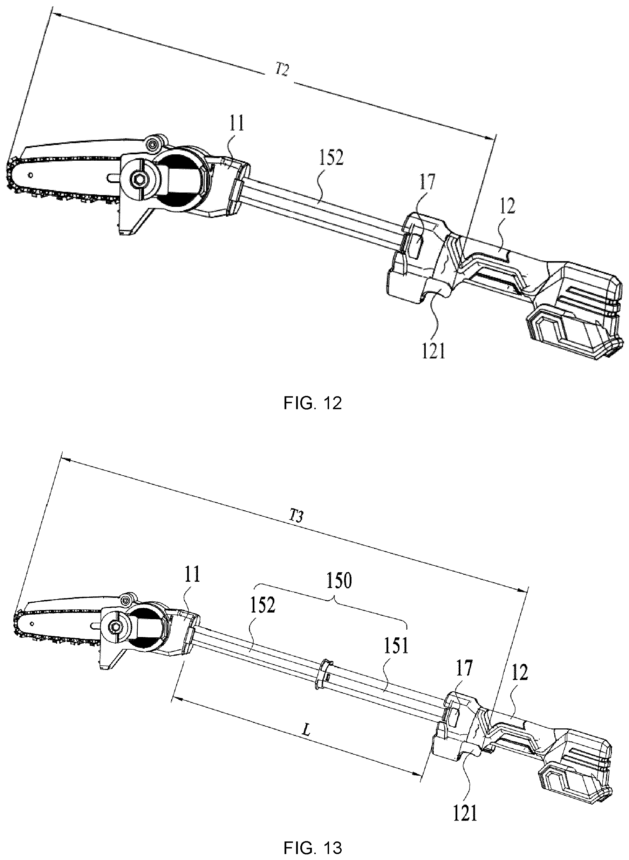

The adjustment device 15 has a first state and a second state so that the chainsaw 100 has a retracted state and an extended state. When the adjustment device 15 is in the first state, the chainsaw 100 is in the retracted state. As shown in FIG. 10, both the first connecting rod 151 and the second connecting rod 152 are retracted into the handle 12. When the adjustment device 15 is in the second state, the chainsaw 100 is in the extended state. In this example, the extended state is divided into two cases. In one case, as shown in FIGS. 11 and 12, the second connecting rod 152 extends out of the handle 12, and the first connecting rod 151 is located inside the handle 12. In the other case, as shown in FIG. 13, the first connecting rod 151 extends out of the handle 12, and the second connecting rod 152 extends out of the first connecting rod 151.

In this example, not only can the adjustment switch 17 lock the first connecting rod 151 and the second connecting rod 152, but also the adjustment switch 17 and the first switch 121 can be interlocked.

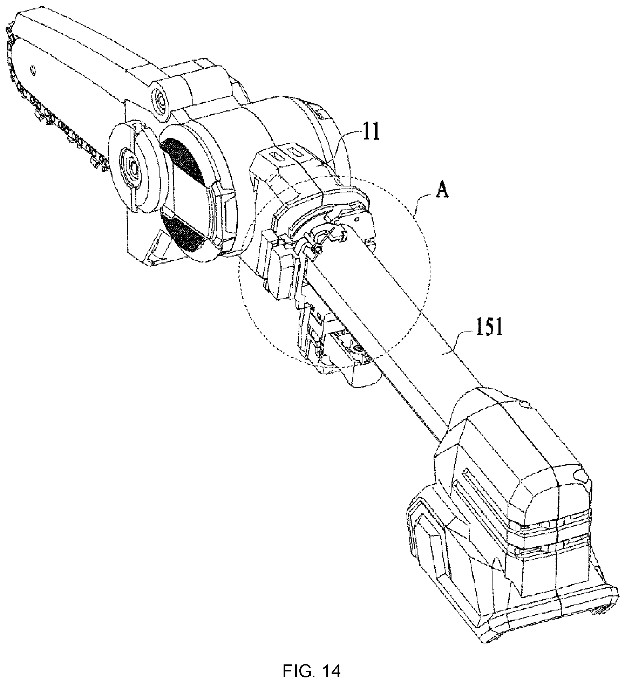

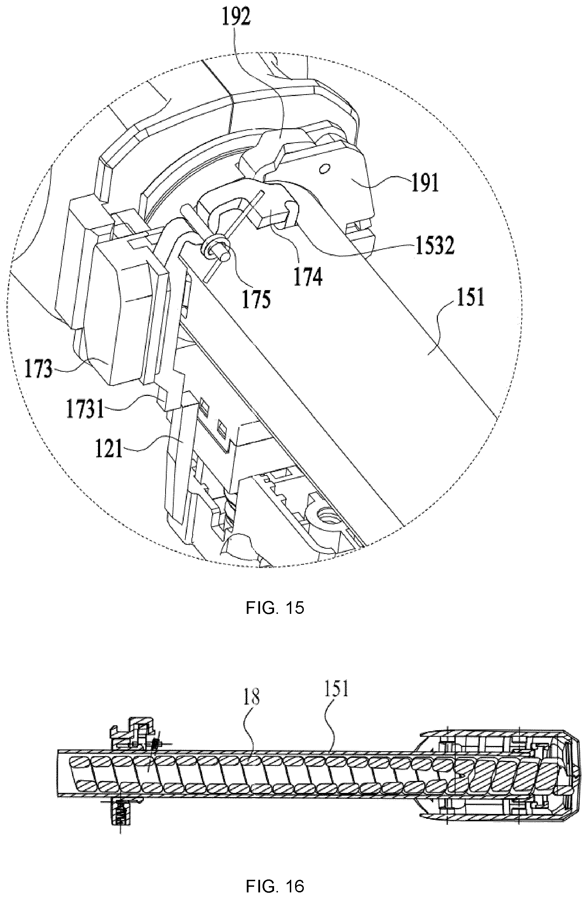

For example, as shown in FIGS. 14 and 15, the adjustment switch 17 includes a button 173 for the user to operate. When the user presses the button 173 to the right side of the chainsaw 100, the adjustment switch 17 is in the unlocking state; and when the user releases the button 173, the adjustment switch 17 is in the locking state. The adjustment switch 17 further includes a first seesaw 174 and a reset torsion spring 175. The first seesaw 174 rotates about a first rotary shaft, and the reset torsion spring 175 is sleeved on the first rotary shaft. When the user presses the button 173, the button 173 presses one end of the first seesaw 174 to lift the other end of the first seesaw 174; and when the user releases the button 173, under the action of the reset torsion spring 175, the button 173 and the first seesaw 174 are reset.

The adjustment device 15 is provided with a locking hole 1532, and the end of the first seesaw 174 can extend into the locking hole 1532 so that the adjustment device 15 is locked, and the handle 12 and the body housing 11 cannot move relative to each other. According to actual requirements, the first connecting rod 151 and the second connecting rod 152 are both provided with locking holes 1532, and when the chainsaw 100 is in a fully retracted state, one locking hole 1532 on the first connecting rod 151 is aligned with one locking hole 1532 on the second connecting rod 152 so that the first seesaw 174 can lock the first connecting rod 151 and the second connecting rod 152 at the same time.

A stop portion 1731 is disposed on the button 173. When the user presses the button 173, the stop portion 1731 is located on the movement path of the first switch 121 so that the first switch 121 cannot be pressed, and thus the first switch 121 is restricted from implementing a power-on function. For example, the stop portion 1731 is located on a side of the button 173 facing the first switch 121, and the first seesaw 174 is located on a side of the button 173 facing away from the first switch 121. Since when the adjustment switch 17 is in the unlocking state, the handle 12 is movable relative to the body housing 11 along the direction of the first straight line, to ensure safety, the power-on function of the first switch 121 is limited.

As shown in FIG. 15, when the adjustment switch 17 is in the locking state, the end of the first seesaw 174 extends out of the locking hole 1532, the relative positions of the handle 12 and the body housing 11 are fixed, and the first switch 121 can implement the power-on function. When the adjustment switch 17 is in the unlocking state, the first switch 121 is locked by the adjustment switch 17 so that the first switch 121 cannot be pressed, and thus the first switch 121 cannot implement the power-on function. For example, as shown in FIG. 16, the wire is inserted through the handle 12 and the adjustment device 15, and the wire connects the motor 14 to the power supply device. For example, the wire is a spring wire so that the wire can be lengthened and shortened as the adjustment device 15 is lengthened and shortened, and thus the power supply stability is not affected.

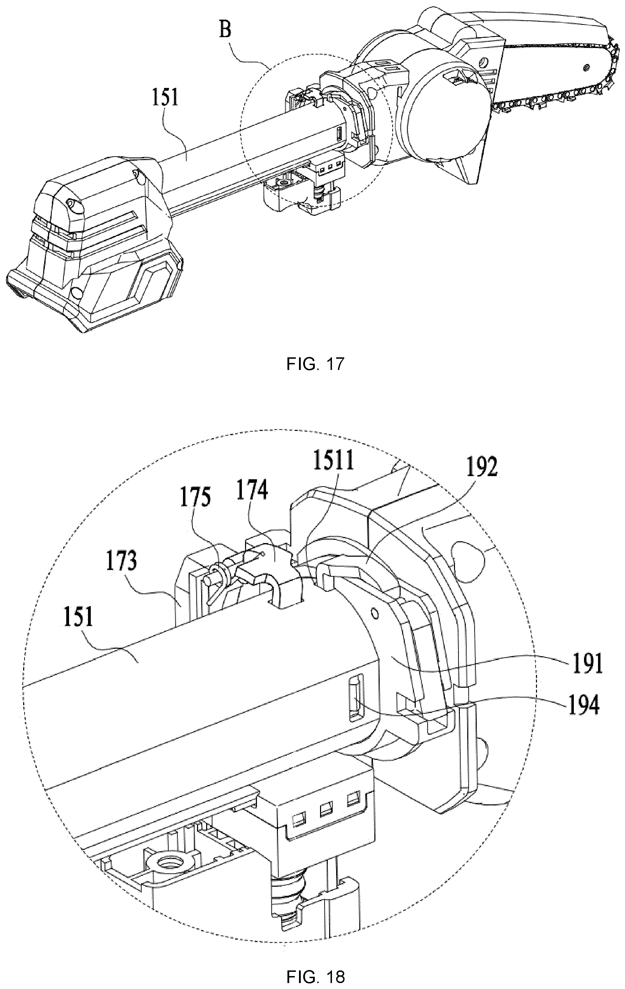

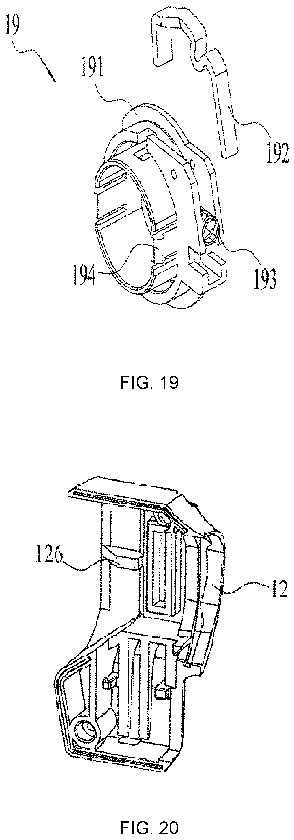

Referring to FIGS. 17 to 20, a locking assembly is disposed between the first connecting rod 151 and the second connecting rod 152. When both the first connecting rod 151 and the second connecting rod 152 extend out of the handle 12, the first connecting rod 151 and the second connecting rod 152 are locked by the locking assembly. When the second connecting rod 152 extends out of the handle 12 and the first connecting rod 151 retracts into the handle 12, the locking assembly provides resistance in the extension direction for the first connecting rod 151.

For example, the locking assembly includes a second seesaw 192 and a protective plate 191 disposed on the second connecting rod 152. The second seesaw 192 and the protective plate 191 are rotatably connected through a second rotary shaft. A resistance spring 193 is disposed on the protective plate 191 and sandwiched between the protective plate 191 and one end of the second seesaw 192. The first connecting rod 151 is provided with a limiting hole 1511, and one end of the second seesaw 192 facing away from the resistance spring can extend into the limiting hole 1511 so that the first connecting rod 151 and the second connecting rod 152 are locked.

A limiting block 126 is disposed on the inner wall of the handle 12. The limiting block 126 can abut against the second seesaw 192 and compress the resistance spring 193. When the second connecting rod 152 extends out of the handle 12 and the first connecting rod 151 retracts into the handle 12, the limiting block 126 abuts against one end of the second seesaw 192 and compresses the resistance spring 193 so that the resistance spring 193 provides resistance to prevent the first connecting rod 151 from sliding out of the handle 12. At this time, if the user needs to pull out the first connecting rod 151, the user needs to overcome the resistance of the resistance spring 193. The advantage of this setting is that the operating feel of the user is improved. When the user feels resistance when pulling out the second connecting rod 152, it can be considered that the second connecting rod 152 has been pulled out in place.

The protective plate 191 covers two sides of the second seesaw 192 to prevent the following: branches and the like are accidentally in contact with the second seesaw 192, causing the resistance spring 193 to be pressed down due to the accidental contact when the resistance spring 193 does not need to be compressed, resulting in safety hazards.

The protective plate 191 and the second connecting rod 152 are engaged through an elastic snap 194. During retraction, after the limiting block 126 abuts against the second seesaw 192, the protective plate 191 is fixed, the second connecting rod 152 continues retracting, and the external force applied by the user to the second connecting rod 152 overcomes the elastic force of the elastic snap 194.

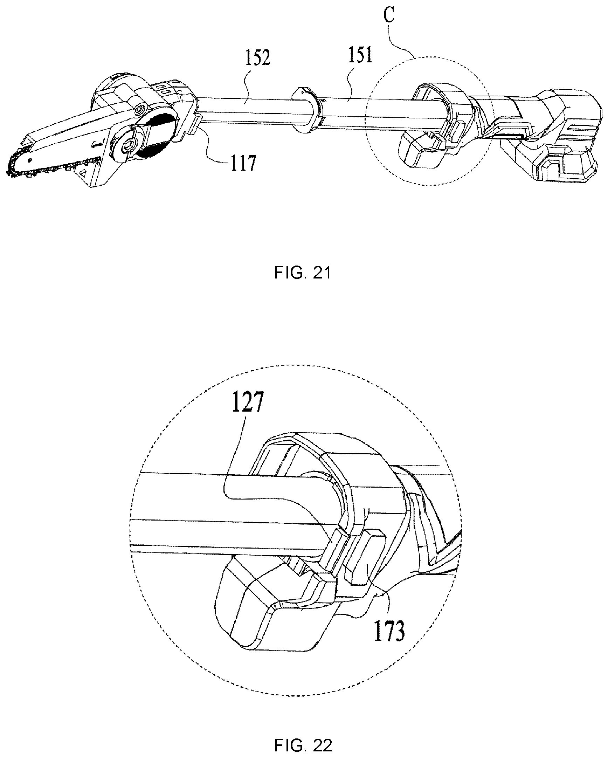

As shown in FIGS. 21 to 23, a clamping structure is further disposed between the handle 12 and the body housing 11. The clamping structure includes a clamping tooth 127 on the button 173 and a snap groove at the rear end of the body housing 11. For example, the body housing 11 is provided with a protrusion 117, and the snap groove is opened on the protrusion 117. When the user presses the button 173, the clamping tooth 127 is disengaged from the snap groove, and the body housing 11 can slide relative to the handle 12; and when both the first connecting rod 151 and the second connecting rod 152 retract and the user releases the button 173, the clamping tooth 127 and the snap groove are clamped so that the body housing 11 and the handle 12 are locked.

In the chainsaw 100 provided in this example, when the chainsaw 100 is in the fully retracted state, one locking hole 1532 on the first connecting rod 151 is aligned with one locking hole 1532 on the second connecting rod 152, and the end of the first seesaw 174 extends into the locking holes 1532 so that the first connecting rod 151 and the second connecting rod 152 are locked. At the same time, the clamping tooth 127 is clamped into the snap groove so that the body housing 11 and the handle 12 are locked.

When the chainsaw 100 needs to be unfolded, the user presses the button 173, and the button 173 presses one end of the first seesaw 174 to disengage the other end of the first seesaw 174 from the locking holes 1532. At this time, the handle 12 and the body housing 11 are movable along the direction of the first straight line 101. After the user applies a force to the body housing 11 to pull out the second connecting rod 152, the second connecting rod 152 extends out of the handle 12, and the first connecting rod 151 is located inside the handle 12. At this time, if the user releases the button 173, under the action of the reset torsion spring 175, the button 173 and the first seesaw 174 are reset, and the end of the first seesaw 174 extends into the locking hole 1532 of the second connecting rod 152 to lock the second connecting rod 152.

When the user presses the button 173 again, the button 173 presses one end of the first seesaw 174 to disengage the other end of the first seesaw 174 from the locking hole 1532 of the second connecting rod 152. At this time, the handle 12 and the body housing 11 are movable along the direction of the first straight line 101. At this time, the user needs to apply a force to the second connecting rod 152 and the first connecting rod 151 along the length direction of the second connecting rod 152 so that the second seesaw 192 is disengaged from the limiting block 126, and the first connecting rod 151 is pulled out. At this time, one end of the second seesaw 192 facing away from the resistance spring extends into the limiting hole 1511 so that the first connecting rod 151 and the second connecting rod 152 are locked stably.

When the first connecting rod 151 extends out of the handle 12, the chainsaw 100 is in a fully extended state. If the user releases the button 173, under the action of the reset torsion spring 175, the button 173 and the first seesaw 174 are reset, and the end of the first seesaw 174 extends into the locking hole 1532 of the first connecting rod 151 to lock the first connecting rod 151.

When the chainsaw 100 needs to be stored, the user presses the button 173, and the button 173 presses one end of the first seesaw 174 to disengage the other end of the first seesaw 174 from the locking hole 1532 of the first connecting rod 151. Since one end of the second seesaw 192 is still located in the limiting hole 1511, the first connecting rod 151 and the second connecting rod 152 are locked. The first connecting rod 151 retracts into the handle 12 first, and when the limiting block 126 is in contact with the second seesaw 192, the limiting block 126 abuts against one end of the second seesaw 192 to disengage the other end of the second seesaw 192 from the limiting hole 1511. At this time, the second connecting rod 152 is slidable relative to the first connecting rod 151, and the second connecting rod 152 retracts into the first connecting rod 151. The user releases the button 173. Under the action of the reset torsion spring 175, the button 173 and the first seesaw 174 are reset, the end of the first seesaw 174 extends into the locking hole 1532 of the second connecting rod 152, and at the same time, the clamping tooth 127 and the snap groove are engaged.

In conjunction with FIGS. 10, 12, and 13, the handheld power tool 10 includes the output assembly 13 connected to the body housing and configured to perform an output operation; the adjustment device is disposed between the body housing and the handle; the handle is movable relative to the body housing along the extension direction of the adjustment device; and the distance between the frontmost side of the power tool and the rearmost side of the first switch 121 is defined as the effective length of the power tool, the handheld power tool 10 includes at least a first effective length T1 and a second effective length T2, and the handheld power tool 10 can work normally at both the first effective length T1 and the second effective length T2. That is to say, the handheld power tool 10 has at least a first working state and a second working state. When the handheld power tool 10 is in the first working state, the handheld power tool 10 has the first effective length T1; and when the handheld power tool 10 is in the second working state, the handheld power tool 10 has the second effective length T2. The first effective length T1 is less than or equal to 60 cm, and the second effective length T2 is greater than the first effective length T1.

The effective length of the chainsaw refers to the distance between the frontmost side of the chain 132 and the rearmost side of the first switch 121. If the switch is the first switch 121 shown in the figure, the rearmost side of the switch is the rearmost side of the first switch 121. If the switch is a switch that is pushable forward and backward, the "rearmost side of the switch" in the effective length refers to the rearmost side of the switch when the switch is in the rearmost gear. That is to say, if the first switch 121 is a switch that is pushable forward and backward, the change in the position of the first switch 121 in the front and rear direction due to the turn-on of the switch is not included in the change in effective length.

For the power tool with a saw blade attachment such as a reciprocating saw and a jigsaw, the effective length refers to the frontmost housing of the power tool without the saw blade attachment and the rearmost side of the first switch 121. For the power tool with a chain such as a chainsaw, the effective length refers to the chain and the rearmost side of the first switch 121.

As shown in FIG. 12, in this example, the distance between the frontmost side of the chain 132 and the rearmost side of the first switch 121 is T2, and T2 is about between 50 cm and 70 cm. In this example, T2 is about 65 cm. Both the first connecting rod 151 and the second connecting rod 152 can completely enter the handle 12 when retracted, thereby not only ensuring the portability of the chainsaw 100 but also ensuring the retractability of the chainsaw 100. In some examples, T2 may be 58 cm, 60 cm, 62 cm, 68 cm, or the like.

In an example, T1 is greater than or equal to 25 cm and less than or equal to 50 cm. The power tool is moderately long and telescopic, so the power tool can adapt to a variety of working conditions.

In an example, the difference between the second effective length T2 and the first effective length T1 is greater than or equal to 5 cm. In an example, the difference between the second effective length T2 and the first effective length T1 is greater than or equal to 10 cm. In an example, the difference between the second effective length T2 and the first effective length T1 is greater than or equal to 15 cm. In an example, the difference between the second effective length T2 and the first effective length T1 is greater than or equal to 20 cm.

The power tool further includes the greatest third effective length T3, and the difference between the third effective length T3 and the second effective length T2 is greater than or equal to 10 cm.

The power tool further includes the coupling portion 122 configured to mount a battery pack, and the total weight of the power tool to which the battery pack is mounted is less than or equal to 6 kg. The whole machine is relatively light in weight, is portable in operation, and can adapt to a wide range of applications. In some examples, the total weight may be 5 kg or 4 kg. In the third example, the total weight is about 2.2 kg.

It is to be noted that the technical solutions involved in the present invention can be applied to the following types of power tools: a nail gun, a trimming machine, a one-handed reciprocating saw, a blower, a pruner, a hedge trimmer, a mower, a one-handed circular saw, a cleaning brush, and the like. The power tools are telescopic and can adapt to a variety of work conditions and workspaces.

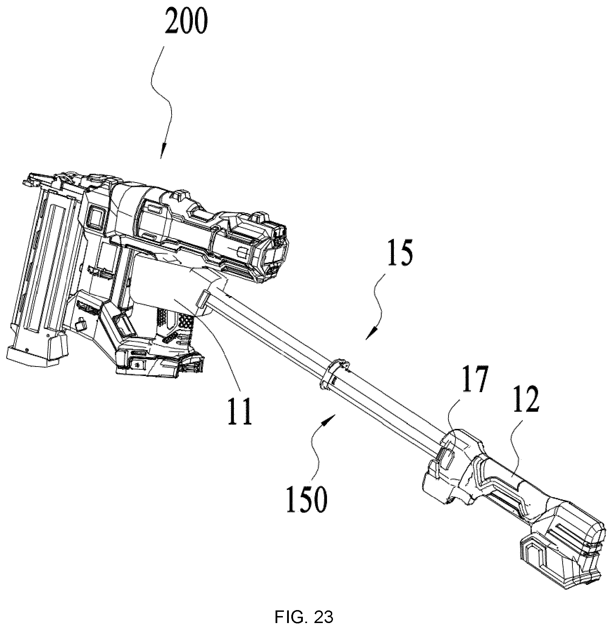

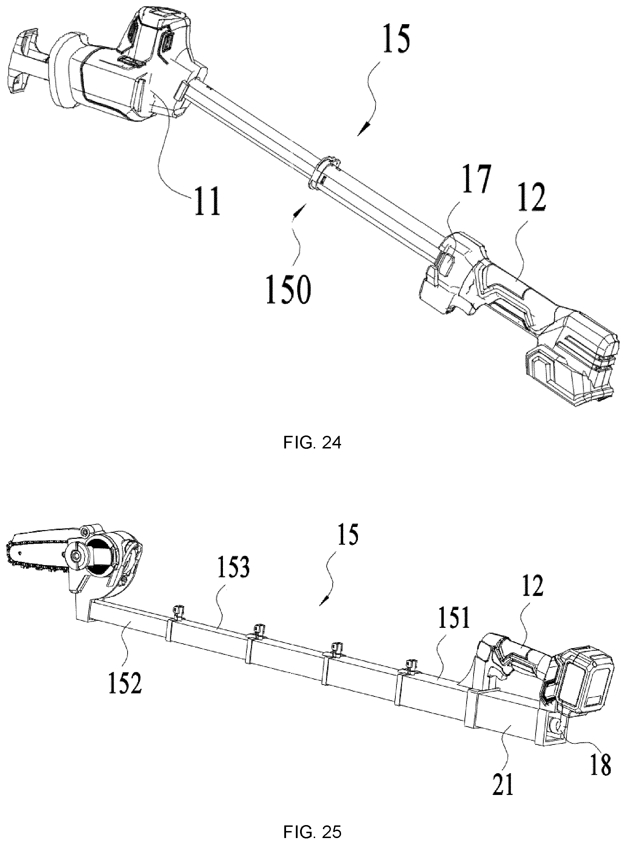

As a fourth example of the handheld power tool 10, referring to FIGS. 23 and 24, the adjustment device 15, the adjustment switch 17, the locking assembly, and the clamping structure provided in the third example above can be used in other handheld power tools 10, such as the nail gun shown in FIG. 23 and the reciprocating saw shown in FIG. 24. For example, FIG. 24 shows a one-handed mini reciprocating saw, which is also a small-sized reciprocating saw.

In FIG. 23, the adjustment switch 17 is disposed on the handle 12. It is to be noted that when the solution disclosed in example three is applied in the form of an extension rod attachment, the handle 12 of the extension rod attachment is further provided with the additional adjustment switch 17 that is different from the switch provided on the original power tool. The adjustment switch 17 is electrically connected to the body housing of the handheld power tool 10.

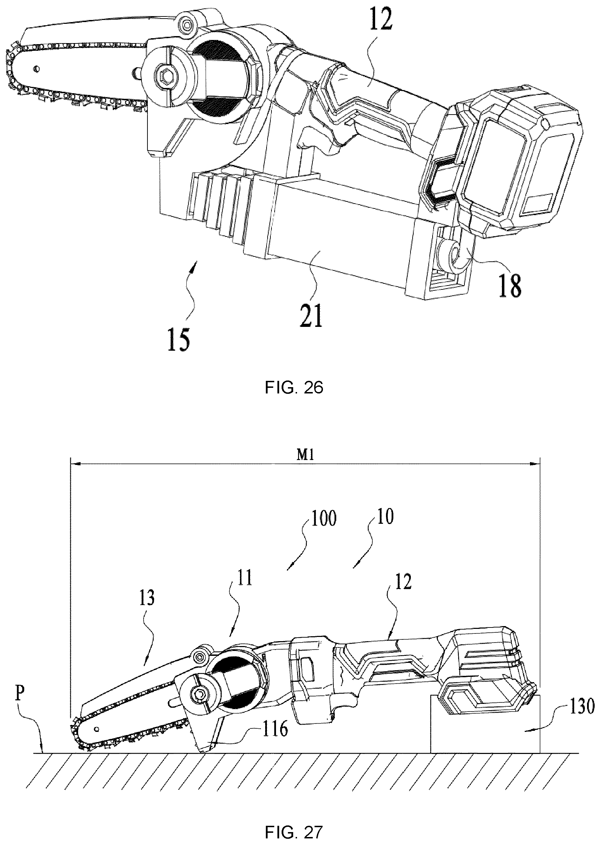

As a fifth example of the handheld power tool 10, referring to FIGS. 25 and 26, the chainsaw 100 further includes a housing disposed on a side of the handle 12 and connected to the handle 12, one end of the adjustment device 15 is located in the housing, and the other end of the adjustment device 15 is connected to the body housing 11.

The adjustment device 15 includes at least the first connecting rod 151, the second connecting rod 152, and at least one intermediate connecting rod 153. The first connecting rod 151 is connected to the housing, the second connecting rod 152 is connected to the body housing 11, and the intermediate connecting rod 153 is disposed between the first connecting rod 151 and the second connecting rod 152. For the connection manner of the first connecting rod 151, the second connecting rod 152, and the intermediate connecting rod 153, reference may be made to example one and example three, and the details are not repeated here.

A spring wire 18 is inserted through the housing and the adjustment device 15. One end of the spring wire 18 is connected to the motor, and the other end of the spring wire is connected to the power supply device.

In an example, T1 is greater than or equal to 10 cm and less than or equal to 40 cm. In this case, the length of the handheld power tool 10 from the grip part of the hand of the user to the frontmost side of the output assembly 13 for operation is smaller, that is to say, the volume of the tool is smaller. Therefore, when the solutions involved in the present invention are adopted, the handheld power tool 10 is more compact and convenient, can be freely telescopic, and can satisfy the requirements of various working conditions.

It is to be noted that the technical solutions in the five examples described above can be adopted in conjunction with each other, and some repetitive features are not repeatedly described at the time of writing the present invention.

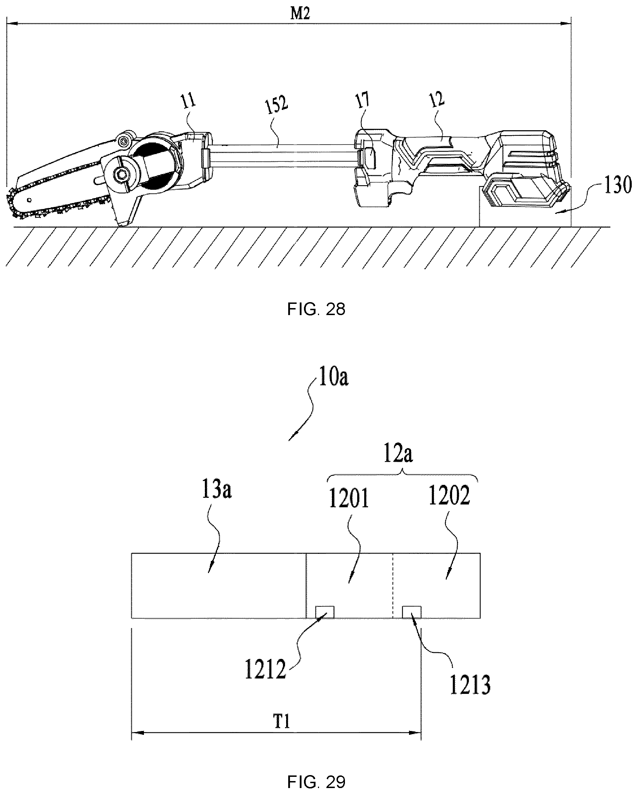

As shown in FIGS. 27 and 28, when the handheld power tool 10 or the chainsaw 100 is placed on a horizontal plane P, the body housing 11 has a protruding support housing 116 so that the chain 132 will not touch the horizontal plane P when the chainsaw 100 is placed on the horizontal plane. At the other end of the chainsaw 100, that is, on a side where a battery pack 130 is mounted, the battery pack 130 may touch the horizontal plane P. When the handheld power tool 10 or the chainsaw 100 is placed in this manner, the distance of the entire handheld power tool 10 or chainsaw 100 in the front and rear direction is defined as the total length of the handheld power tool 10 or chainsaw 100. The total length is adjustable, and the minimum value of the total length is less than 1.2 m.

The handheld power tool 10 has at least two working states, that is, the first working state and the second working state. When the handheld power tool 10 is in the first working state, the handheld power tool 10 has a first total length M1; and when the handheld power tool 10 is in the second working state, the handheld power tool has a second total length M2. The first total length M1 is less than or equal to 1.2 m, and the second total length M2 is greater than the first total length M1. In an example, the first total length M1 is less than or equal to 1 m. In an example, the first total length M1 is less than or equal to 0.8 m. In an example, the first total length M1 is less than or equal to 0.7 m. In an example, the first total length M1 is less than or equal to 0.6 m.

In an example, the first total length M1 is less than or equal to 1 m, and the first effective length T1 is less than or equal to 60 cm. In an example, the first total length M1 is less than or equal to 1 m, and the first effective length T1 is less than or equal to 50 cm. In an example, the difference between the second total length M2 and the first total length M1 is greater than or equal to 10 cm. In an example, the difference between the second total length M2 and the first total length M1 is greater than or equal to 20 cm.

It is to be noted that the minimum value of the total length M refers to the shortest total length when the adjustment device 15 of the handheld power tool 10 or chainsaw 100 retracts along the front and rear direction of the tool. The content in the example shown in FIG. 27 that is repeated in the examples shown in FIGS. 1 to 26 is not repeatedly described.

The following is a supplementary description of the first switch 121. The first switch 121 can at least control the starting and stopping of the motor. That is to say, the first switch 121 may have other functions, such as adjusting the rotational speed of the motor. At least one first switch 121 may be provided.

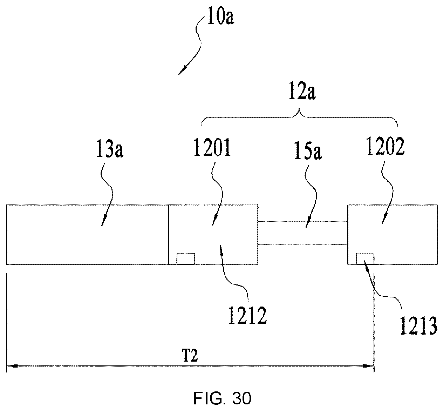

The examples shown in FIGS. 29 and 30 are described below. As shown in FIG. 29, a handheld power tool 10a includes an output assembly 13a and a handle 12a for the user to hold. The handheld power tool 10a has at least two switches that can control the starting and stopping of the motor, that is, a second switch 1212 and a first switch 1213. The second switch 1212 and the first switch 1213 are spaced apart from each other on the handle 12a. The handle 12a may be divided into a first handle portion 1201 and a second handle portion 1202. The first handle portion 1201 is closer to the output assembly 13a than the second handle portion 1202. The second switch 1212 is disposed on the first handle portion 1201, and the first switch 1213 is disposed on the second handle portion 1202.

An adjustment device 15a is further disposed in the handle 12a. When the handheld power tool 10a is extended from the retracted state shown in FIG. 29 to the extended state shown in FIG. 30, the adjustment device 15a increases the distance between the first handle portion 1201 and the second handle portion 1202. In an example, the adjustment device 15a may be a telescopic rod assembly similar to or different from the preceding structure. In the retracted state shown in FIG. 29, the user may hold the hand on the first handle portion 1201 and control the starting and stopping of the motor by operating the second switch 1212. In the extended state shown in FIG. 30, the user may hold the hand on the second handle portion 1202 and control the starting and stopping of the motor by operating the first switch 1213.

The distance between the rearmost side of the first switch 1213 and the frontmost side of the handheld power tool 10a is adjustable. The distance between the frontmost side of the handheld power tool 10a and the rearmost side of the first switch is defined as the effective length of the handheld power tool 10a. The handheld power tool 10a includes at least the first effective length T1 and the second effective length T2. The handheld power tool 10a has at least two working states, that is, the first working state and the second working state. When the handheld power tool 10a is in the first working state, the handheld power tool 10a has the first effective length T1; and when the handheld power tool 10a is in the second working state, the handheld power tool 10a has the second effective length T2. The first effective length T1 is less than or equal to 1 m, and the second effective length T2 is greater than the first effective length T1. It is to be noted that the definition of the first effective length T1 and the second effective length T2 in this case is consistent with the preceding description, and the details are not repeated here.

For the example disclosed in FIGS. 29 and 30, one usage situation may be that in the retracted state of FIG. 29, the user uses the second switch 1212; and in the extended state of FIG. 30, the user uses the first switch 1213. It is to be noted that although only one of the first switch 1213 and the second switch 1212 can be activated at a moment, and the user controls the starting and stopping of the motor, both the first switch 1213 and the second switch 1212 can be used for controlling the starting and stopping of the motor.

As shown in FIGS. 6 and 13, the adjustment device 15 includes a telescopic rod assembly 150. The adjustment device 15 can enable the handheld power tool 10 to have at least two working states, that is, the first working state and the second working state. In some examples, the adjustment device 15 may not include the telescopic rod assembly 150, and other structures may be used to adjust the overall length of the handheld power tool 10.

In addition, one-handed saws are common in the field of power tools. A one-handed saw is generally a sawing power tool that is operable by the user with just one hand. According to different purposes and working conditions, the one-handed saws may generally be divided into a one-handed chainsaw, a mini chainsaw, a one-handed reciprocating saw, a mini reciprocating saw, a one-handed electric circular saw, a mini electric circular saw, and the like. Two hands are generally required to hold the pole saw. The one-handed chainsaw and the mini chainsaw tend to be shorter in length than the pole saw and are generally configured to cut items at close range. In the technical solutions involved in the present invention, the chainsaw can be used in a variety of working conditions, the limit on the distance between the object to be cut and the user is smaller, and the chainsaw may be long or short, flexible in operation, and suitable for a variety of working conditions.

With continued reference to FIGS. 27 and 28, the present invention discloses a one-handed saw. The one-handed saw includes a motor accommodated in a body housing; a handle for a user to hold; and an output assembly for performing an output operation. When the one-handed saw is placed on a horizontal plane, the maximum distance of the one-handed saw along the direction parallel to the horizontal plane is defined as the total length of the one-handed saw, and the total length is adjustable.

## Claims

1. A handheld power tool (10, 10a), comprising:
a body housing (11);
a motor (14);
a handle (7) for a user to hold, wherein a first switch (121) is disposed on the handle (7) and configured to at least control starting and stopping of the motor (14); and
an output assembly (13, 13a) configured to perform an output operation;
and an adjustment device (15) comprising a telescopic rod assembly (150), wherein a length of the adjustment device (15) changes so that the handheld power tool (10, 10a) has at least two working states, that is, a first working state and a second working state, wherein the adjustment device (15) comprises a first connecting rod (151) connected to the handle (7),
wherein the motor (14) is disposed in the body housing (11), the output assembly (13, 13a) is at least partially disposed in the body housing (11), and the adjustment device (15) further includes a second connecting rod (152) connected to the body housing (11),
wherein a distance between a frontmost side of the handheld power tool (10, 10a) and a rearmost side of the first switch is defined as an effective length of the handheld power tool (10, 10a); wherein when the handheld power tool (10, 10a) is in the first working state, the handheld power tool (10, 10a) has a first effective length (T1); and when the handheld power tool (10, 10a) is in the second working state, the handheld power tool (10, 10a) has a second effective length (T2); wherein the first effective length (T1) is less than or equal to 1 m, and the second effective length (T2) is greater than the first effective length (T1);
**characterised in that** the handheld power tool (10, 10a) further comprises:
an adjustment switch (17), wherein at least a part of the adjustment switch (17) is disposed on the handle (7), and wherein a stop portion (1731) is disposed on the adjustment switch (17), wherein the stop portion (1731) is located on a movement path of the first switch (121) controlling the starting and stopping of the motor and the stop portion (1731) is configured to restrict the first switch (121) from implementing a function of starting the motor (14), when the adjustment switch (17) is in an unlocked state.

2. The handheld power tool of claim 1, wherein a difference between the second effective length (T2) and the first effective length (T1) is greater than or equal to 10 cm.

3. The handheld power tool of claim 1, wherein a difference between the second effective length (T2) and the first effective length (T1) is greater than or equal to 20 cm.

4. The handheld power tool of claim 1, further comprising a third effective length (T3), wherein the third effective length (T3) is greater than the second effective length (T2), and a difference between the third effective length (T3) and the second effective length (T2) is greater than or equal to 10 cm.

5. The handheld power tool of claim 1, further comprising a coupling portion (122) configured to mount a battery pack (130), wherein total weight of the handheld power tool (10, 10a) to which the battery pack (130) is mounted is less than or equal to 6 kg.

6. The handheld power tool of claim 1, wherein the adjustment device (15) is telescopic to a first state and a second state along a front and rear direction of the handheld power tool (10, 10a).

7. The handheld power tool of claim 1, wherein the adjustment device (15) is provided with a locking hole (1532), the adjustment switch further comprises a button (173) for the user to operate, a first seesaw (174) rotatably connected to the handle (7), and a reset torsion spring (175) connected to the first seesaw (174), the button (173) is capable of pressing one end of the first seesaw (174), and another end of the first seesaw (174) is selectively inserted into the locking hole (1532).

8. The handheld power tool of claim 7, wherein the first connecting rod (151) is provided with the locking hole (1532).

9. The handheld power tool of claim 1, wherein a locking assembly is disposed between the first connecting rod (151) and the second connecting rod (152), and when both the first connecting rod (151) and the second connecting rod (152) extend out of the handle (7), the locking assembly locks the first connecting rod (151) and the second connecting rod (152).

10. The handheld power tool of claim 1, further comprising a coupling portion (122) configured to mount a battery pack (130), wherein the handheld power tool (10, 10a) further comprises a spring wire (18), the spring wire (18) is inserted through the handle (7) and the adjustment device (15), one end of the spring wire (18) is electrically connected to the motor (14), and another end of the spring wire (18) is electrically connected to the battery pack (130).

11. The handheld power tool of claim 1, further comprising a power supply device (17) for supplying electric power to at least the motor (14), wherein the power supply device (17) is detachably connected to a rear part of the handle (7).

12. The handheld power tool of claim 1, wherein the first effective length (T1) is less than or equal to 60 cm.

13. The handheld power tool of claim 1, wherein the first effective length (T1) is less than or equal to 50 cm.

## Patentansprüche

1. Ein handgeführtes Elektrowerkzeug (10, 10a), umfassend:
ein Gehäuse (11);
einen Motor (14);
einen Griff (7) zum Halten durch einen Benutzer, wobei ein erster Schalter (121) an dem Griff (7) angeordnet und dazu ausgebildet ist, zumindest Starten und Stoppen des Motors (14) zu steuern; und
eine Abtriebsanordnung (13, 13a), die dazu ausgebildet ist, eine Abtriebsoperation durchzuführen;
und eine Verstelleinrichtung (15), die eine Teleskopstangenanordnung (150) umfasst, wobei sich eine Länge der Verstelleinrichtung (15) ändert, so dass das handgeführte Elektrowerkzeug (10, 10a) mindestens zwei Arbeitszustände aufweist, nämlich einen ersten Arbeitszustand und einen zweiten Arbeitszustand, wobei die Verstelleinrichtung (15) eine erste Verbindungsstange (151) umfasst, die mit dem Griff (7) verbunden ist,
wobei der Motor (14) in dem Gehäuse (11) angeordnet ist, die Abtriebsanordnung (13, 13a) mindestens teilweise in dem Gehäuse (11) angeordnet ist, und die Verstelleinrichtung (15) ferner eine zweite Verbindungsstange (152) umfasst, die mit dem Gehäuse (11) verbunden ist,
wobei ein Abstand zwischen einer vordersten Seite des handgeführten Elektrowerkzeugs (10, 10a) und einer hintersten Seite des ersten Schalters als eine wirksame Länge des handgeführten Elektrowerkzeugs (10, 10a) definiert ist; wobei, wenn sich das handgeführte Elektrowerkzeug (10, 10a) in dem ersten Arbeitszustand befindet, das handgeführte Elektrowerkzeug (10, 10a) eine erste wirksame Länge (T1) aufweist; und wobei, wenn sich das handgeführte Elektrowerkzeug (10, 10a) in dem zweiten Arbeitszustand befindet, das handgeführte Elektrowerkzeug (10, 10a) eine zweite wirksame Länge (T2) aufweist; wobei die erste wirksame Länge (T1) kleiner als oder gleich 1 m ist, und die zweite wirksame Länge (T2) größer als die erste wirksame Länge (T1) ist;
**dadurch gekennzeichnet, dass**
das handgeführte Elektrowerkzeug (10, 10a) ferner umfasst:
einen Verstellschalter (17), wobei mindestens ein Teil des Verstellschalters (17) an dem Griff (7) angeordnet ist, und wobei ein Anschlagabschnitt (1731) an dem Verstellschalter (17) angeordnet ist, wobei der Anschlagabschnitt (1731) auf einem Bewegungsweg des ersten Schalters (121) angeordnet ist, der das Starten und Stoppen des Motors steuert, und der Anschlagabschnitt (1731) dazu ausgebildet ist, den ersten Schalter (121) daran zu hindern, eine Funktion des Startens des Motors (14) auszuführen, wenn sich der Verstellschalter (17) in einem entriegelten Zustand befindet.

2. Das handgeführte Elektrowerkzeug nach Anspruch 1, wobei eine Differenz zwischen der zweiten wirksamen Länge (T2) und der ersten wirksamen Länge (T1) größer als oder gleich 10 cm ist.

3. Das handgeführte Elektrowerkzeug nach Anspruch 1, wobei eine Differenz zwischen der zweiten wirksamen Länge (T2) und der ersten wirksamen Länge (T1) größer als oder gleich 20 cm ist.

4. Das handgeführte Elektrowerkzeug nach Anspruch 1, ferner umfassend eine dritte wirksame Länge (T3), wobei die dritte wirksame Länge (T3) größer als die zweite wirksame Länge (T2) ist, und eine Differenz zwischen der dritten wirksamen Länge (T3) und der zweiten wirksamen Länge (T2) größer als oder gleich 10 cm ist.

5. Das handgeführte Elektrowerkzeug nach Anspruch 1, ferner umfassend einen Kopplungsabschnitt (122), der dazu ausgebildet ist, einen Akkupack (130) anzubringen, wobei ein Gesamtgewicht des handgeführten Elektrowerkzeugs (10, 10a), an dem der Akkupack (130) angebracht ist, kleiner als oder gleich 6 kg ist.

6. Das handgeführte Elektrowerkzeug nach Anspruch 1, wobei die Verstelleinrichtung (15) entlang einer Vorder-Hinter-Richtung des handgeführten Elektrowerkzeugs (10, 10a) in einen ersten Zustand und einen zweiten Zustand teleskopierbar ist.

7. Das handgeführte Elektrowerkzeug nach Anspruch 1, wobei die Verstelleinrichtung (15) mit einer Verriegelungsöffnung (1532) versehen ist, der Verstellschalter ferner eine Taste (173) zum Betätigen durch den Benutzer, eine erste Wippe (174), die drehbar mit dem Griff (7) verbunden ist, und eine mit der ersten Wippe (174) verbundene Rückstelltorsionsfeder (175) umfasst, die Taste (173) in der Lage ist, ein Ende der ersten Wippe (174) zu drücken, und ein anderes Ende der ersten Wippe (174) selektiv in die Verriegelungsöffnung (1532) eingeführt ist.

8. Das handgeführte Elektrowerkzeug nach Anspruch 7, wobei die erste Verbindungsstange (151) mit der Verriegelungsöffnung (1532) versehen ist.

9. Das handgeführte Elektrowerkzeug nach Anspruch 1, wobei zwischen der ersten Verbindungsstange (151) und der zweiten Verbindungsstange (152) eine Verriegelungsanordnung angeordnet ist, und wenn sowohl die erste Verbindungsstange (151) als auch die zweite Verbindungsstange (152) aus dem Griff (7) herausragen, die Verriegelungsanordnung die erste Verbindungsstange (151) und die zweite Verbindungsstange (152) verriegelt.

10. Das handgeführte Elektrowerkzeug nach Anspruch 1, ferner umfassend einen Kopplungsabschnitt (122), der dazu ausgebildet ist, einen Akkupack (130) anzubringen, wobei das handgeführte Elektrowerkzeug (10, 10a) ferner einen Federdraht (18) umfasst, der durch den Griff (7) und die Verstelleinrichtung (15) geführt ist, ein Ende des Federdrahts (18) elektrisch mit dem Motor (14) verbunden ist, und ein anderes Ende des Federdrahts (18) elektrisch mit dem Akkupack (130) verbunden ist.

11. Das handgeführte Elektrowerkzeug nach Anspruch 1, ferner umfassend eine Stromversorgungsvorrichtung (17) zum Versorgen zumindest des Motors (14) mit elektrischer Energie, wobei die Stromversorgungsvorrichtung (17) lösbar mit einem hinteren Teil des Griffs (7) verbunden ist.

12. Das handgeführte Elektrowerkzeug nach Anspruch 1, wobei die erste wirksame Länge (T1) kleiner als oder gleich 60 cm ist.

13. Das handgeführte Elektrowerkzeug nach Anspruch 1, wobei die erste wirksame Länge (T1) kleiner als oder gleich 50 cm ist.

## Revendications

1. Un outil électrique portatif (10, 10a), comprenant :
un boîtier (11) ;
un moteur (14) ;
une poignée (7) destinée à être tenue par un utilisateur, dans laquelle un premier interrupteur (121) est disposé sur la poignée (7) et configuré pour commander au moins démarrage et arrêt du moteur (14) ; et
un ensemble de sortie (13, 13a) configuré pour effectuer une opération de sortie ;
et un dispositif de réglage (15) comprenant un ensemble de tiges télescopiques (150), dans lequel une longueur du dispositif de réglage (15) change de sorte que l'outil électrique portatif (10, 10a) présente au moins deux états de fonctionnement, à savoir un premier état de fonctionnement et un deuxième état de fonctionnement, dans lequel le dispositif de réglage (15) comprend une première tige de liaison (151) reliée à la poignée (7),
dans lequel le moteur (14) est disposé dans le boîtier (11), l'ensemble de sortie (13, 13a) est disposé au moins partiellement dans le boîtier (11), et le dispositif de réglage (15) comprend en outre une deuxième tige de liaison (152) reliée au boîtier (11),
dans lequel une distance entre un côté le plus avant de l'outil électrique portatif (10, 10a) et un côté le plus arrière du premier interrupteur est définie comme une longueur effective de l'outil électrique portatif (10, 10a) ; dans lequel lorsque l'outil électrique portatif (10, 10a) est dans le premier état de fonctionnement, l'outil électrique portatif (10, 10a) a une première longueur effective (T1) ; et lorsque l'outil électrique portatif (10, 10a) est dans le deuxième état de fonctionnement, l'outil électrique portatif (10, 10a) a une deuxième longueur effective (T2) ; dans lequel la première longueur effective (T1) est inférieure ou égale à 1 m, et la deuxième longueur effective (T2) est supérieure à la première longueur effective (T1) ;
**caractérisé en ce que**
l'outil électrique portatif (10, 10a) comprend en outre :
un interrupteur de réglage (17), dans lequel au moins une partie de l'interrupteur de réglage (17) est disposée sur la poignée (7), et dans lequel une portion de butée (1731) est disposée sur l'interrupteur de réglage (17), dans lequel la portion de butée (1731) est située sur un trajet de déplacement du premier interrupteur (121) commandant le démarrage et l'arrêt du moteur, et la portion de butée (1731) est configurée pour empêcher le premier interrupteur (121) de mettre en œuvre une fonction de démarrage du moteur (14), lorsque l'interrupteur de réglage (17) est dans un état déverrouillé.

2. L'outil électrique portatif selon la revendication 1, dans lequel une différence entre la deuxième longueur effective (T2) et la première longueur effective (T1) est supérieure ou égale à 10 cm.

3. L'outil électrique portatif selon la revendication 1, dans lequel une différence entre la deuxième longueur effective (T2) et la première longueur effective (T1) est supérieure ou égale à 20 cm.

4. L'outil électrique portatif selon la revendication 1, comprenant en outre une troisième longueur effective (T3), dans lequel la troisième longueur effective (T3) est supérieure à la deuxième longueur effective (T2), et une différence entre la troisième longueur effective (T3) et la deuxième longueur effective (T2) est supérieure ou égale à 10 cm.

5. L'outil électrique portatif selon la revendication 1, comprenant en outre une portion de couplage (122) configurée pour monter un bloc-batterie (130), dans lequel un poids total de l'outil électrique portatif (10, 10a) sur lequel le bloc-batterie (130) est monté est inférieur ou égal à 6 kg.

6. L'outil électrique portatif selon la revendication 1, dans lequel le dispositif de réglage (15) est télescopique vers un premier état et un deuxième état le long d'une direction avant-arrière de l'outil électrique portatif (10, 10a).

7. L'outil électrique portatif selon la revendication 1, dans lequel le dispositif de réglage (15) est pourvu d'un trou de verrouillage (1532), l'interrupteur de réglage comprenant en outre un bouton (173) destiné à être actionné par l'utilisateur, une première bascule (174) reliée rotativement à la poignée (7), et un ressort de torsion de rappel (175) relié à la première bascule (174), le bouton (173) étant apte à presser une extrémité de la première bascule (174), et une autre extrémité de la première bascule (174) étant sélectivement introduite dans le trou de verrouillage (1532).

8. L'outil électrique portatif selon la revendication 7, dans lequel la première tige de liaison (151) est pourvue du trou de verrouillage (1532).

9. L'outil électrique portatif selon la revendication 1, dans lequel un ensemble de verrouillage est disposé entre la première tige de liaison (151) et la deuxième tige de liaison (152), et lorsque la première tige de liaison (151) et la deuxième tige de liaison (152) s'étendent toutes deux hors de la poignée (7), l'ensemble de verrouillage verrouille la première tige de liaison (151) et la deuxième tige de liaison (152).

10. L'outil électrique portatif selon la revendication 1, comprenant en outre une portion de couplage (122) configurée pour monter un bloc-batterie (130), dans lequel l'outil électrique portatif (10, 10a) comprend en outre un fil à ressort (18), le fil à ressort (18) étant introduit à travers la poignée (7) et le dispositif de réglage (15), une extrémité du fil à ressort (18) étant électriquement connectée au moteur (14), et une autre extrémité du fil à ressort (18) étant électriquement connectée au bloc-batterie (130).

11. L'outil électrique portatif selon la revendication 1, comprenant en outre un dispositif d'alimentation électrique (17) pour fournir une énergie électrique au moins au moteur (14), dans lequel le dispositif d'alimentation électrique (17) est connecté de manière amovible à une partie arrière de la poignée (7).

12. L'outil électrique portatif selon la revendication 1, dans lequel la première longueur effective (T1) est inférieure ou égale à 60 cm.

13. L'outil électrique portatif selon la revendication 1, dans lequel la première longueur effective (T1) est inférieure ou égale à 50 cm.
